(19) Europäisches Patentamt
European Patent Office
Office européen des brevets

(11) EP 2 392 896 B1

(12) **EUROPEAN PATENT SPECIFICATION**

(45) Date of publication and mention
of the grant of the patent:
**27.11.2019 Bulletin 2019/48**

(51) Int Cl.:
***G01B 11/24*** *(2006.01)*

(21) Application number: **10164637.0**

(22) Date of filing: **01.06.2010**

(54) **Measuring device of thread parameters for threaded joints**

Vorrichtung zur Messung der Gewindeparameter für Gewindeverbindungen

Dispositif de mesure de paramètres de fil pour joints filetés

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**07.12.2011 Bulletin 2011/49**

(73) Proprietor: **Tenaris Connections B.V.**
**1019 GM Amsterdam (NL)**

(72) Inventors:
• **Bonadeo, Nicolas Hernan**
**B2804MHA BUENOS AIRES (AR)**
• **Berra, Sebastian**
**B2804MHA BUENOS AIRES (AR)**
• **Etcheverry, Javier Ignacio**
**B2804MHA BUENOS AIRES (AR)**

(74) Representative: **Cinquantini, Bruno et al**
**Notarbartolo & Gervasi S.p.A.**
**Corso di Porta Vittoria, 9**
**20122 Milano (IT)**

(56) References cited:
**US-A- 5 521 707     US-A1- 2010 110 448**

• **"LASERS GAUGE PITCH" MACHINE DESIGN, PENTON MEDIA, CLEVELAND, OH, US, vol. 67, no. 19, 26 October 1995 (1995-10-26), page 40, XP000545874 ISSN: 0024-9114**

**Description**

**Field of the invention**

The present invention relates to a measuring device for non-destructive measurement of geometrical parameters of threaded joints, in particular joints for pipes used in the hydrocarbon industry.

**Background of the invention**

In a threading manufacturing process such as for a screw, bolt or a threaded pipe, it is necessary to verify that the geometrical dimensions of the piece comply with the tolerances set for the product. In addition, information on the nature of the deviation from these tolerances can be used as a feedback to the manufacturing process, thus avoiding rejects later on in the process.

Main problems that are encountered in performing the measurement operations for quality control on non-coated threadings are the precision and repeatability of measurements. In the past there have been attempts to improve accuracy and repeatability of the measurement operations and to make measurement systems capable of measuring the complex thread shape of mechanical objects like the pipes used in the oil industry. In this particular technical field the need is felt to measure several parameters like taper of pin and box, thread pitch, thread height, pin or box diameter, pipe ovality, run in and run out.

In those cases where the pipe threading is also coated, e.g. with a dry lubricant, additional problems may pop up. As in the case of non coated pipes, it is very important to ensure and verify the geometrical dimensions of the finished piece after the coating process is finished, in order to comply with the tolerances set for the final object.

While the problem of ensuring precision and repeatability of measurements remains paramount in this case, as in the case of non-coated threadings, another important problem in performing the measurement operation specifically when the joints are coated is the fact that state-of-the-art measurement devices cannot ensure that the coating material is not damaged during measurement procedure, eg. due to handling of the pipes and to the use of contact type measuring devices. In the known state of the art there are some measuring systems which are proposed for measuring tubular products with or without coating applied on its surface. However, none of them is especially adapted for measuring threaded joints in this technology field and even less, if the threaded parts of tubular joints are coated.

Measurement devices using ultrasounds are known, but such technique has the drawback that it cannot be applied to threadings with coatings having small thicknesses as those applied in threaded joints for the hydrocarbon industry, since the wavelength of the ultrasounds is much larger than the thicknesses to be measured.

Other measurement devices use eddy currents, but this technique has the disadvantage that the measurement device must be placed either in contact or very close to the work piece. It is difficult to use this technique on the threaded parts of joints because of the complex geometry of these parts and because of the generation of boundary effects when eddy currents are generated on those surfaces. The deformation of the current field lines caused by the geometry and the fact that the sensor must be very near to the thread surface are two important constraints that make these devices little suitable to measurement of pipe threadings.

Other known measurement devices are based on X-ray fluorescence or back scattering, whereby the coating highlights when it is irradiated and the fluorescence is reabsorbed by the coating. Thus, the amount of fluorescence measured is proportional to the thickness. The results are influenced by several factors. It is not a technique generally applicable and, in complex cases, the results depend on the angle of incidence of X-rays. Another important drawback of these devices is the fact that the use of X rays is harmful to operators.

Similar measurement devices are based on infrared (IR) absorption, where excitation of the coating is made by means of visible light. Its application is limited to the cases where the coating is made of material which is excitable by light and on the grade of IR absorption.

Document US5521707 discloses a non-contact laser-based sensor guided by a precision mechanical system which scans a thread profile and produces a set of computer images of the threading. The computer images are then analyzed to acquire quantitative information about thread characteristics such as pitch, lead, root radius, flank angle, surface roughness, helix variation, and pitch diameter. The device disclosed in that document however has the disadvantage that it does not address explicitly the important problem of piece misalignment and therefore it requires an absolute precision of the operations when aligning the piece to be measured with the mechanical system coordinates. This alignment can only be achieved when the piece is at the threading machine. Measuring at the threading machine has several disadvantages: it adds costly time to the threading manufacturing by preventing inspection and manufacturing processes from running in parallel, it requires placing delicate optics and precise mechanical components in a hostile environment with cutting oil and strong vibrations present, and to some extent uses the same mechanical movement that has to be verified. Once the pipe has been removed from the lathe, this alignment is very difficult to achieve manually and consequently the system disclosed by that document only allows measurement of relative or local magnitudes, i.e.

thread height by comparing contiguous crests and roots, whereas errors introduced by a piece misalignment are not "noticed" by that solution and in these cases they produce an insufficiently precise measurement. It also does not address the measurement of important thread parameters such as taper, run-in, run-out, black crest, length of complete thread or specific process parameters such as taper profile, pitch linearity, Fourier mode decomposition of ovality, lathe plate misalignment, hook end angle severity to name some.

Therefore the need is felt to provide a measurement device and method of general use on threaded joints by means of which measurements can be made in a repeatable, satisfactory and sufficiently precise manner.

**Summary of the invention**

It is therefore an object of the present invention to provide a measurement device which overcomes the aforementioned drawbacks and limitations.

A main object of the present invention is to provide a device for accurate, automatically performed, non-contact inspection of threaded objects, in particular of oil pipe threads, especially of pins and boxes.

The above mentioned objects and others which will become apparent in view of the following description, are achieved according to the present invention, by means of a measurement device for measuring thread parameters of a threaded object according to claim 1.

In the following description we refer to trajectory as the path followed by a laser sensor through space, describing a sequence of values of the surface location with respect to the laser sensor.

The device according to the invention achieves several advantages:

- when it is used on threaded joints it provides measurements which are precise and performed automatically. This is combined with the advantage of performing a non destructive measurement method as there is no contact between the surface and the measuring instrument, whereby the eventuality of damaging the coating layer when the surface is coated during the measurement operation is drastically minimized, because of the use in the device of non-contact sensors, like laser or other similar optical sensors sensors.
- it allows acquisition of quantitative information about thread characteristics, e.g. taper, seal diameter and ovality, run-in, run-out, thread diameter and ovality, pitch along a plurality of generatrices of the tube, and step height,
- it allows absolute measurements to be performed on several threading parameters and tube features regardless of any misalignment between the threaded tube and the measurement apparatus,
- the pipe or object to be measured is precisely located in the space thanks to the series of scanning and fitting steps performed, regardless of its position and alignment with respect to the measurement device.

It will be appreciated that an important feature of this device is the fact that during measuring operation the thread frame of reference is detected independently of the position that the threaded object has in respect of the device and independently of the fact that the surface is coated or uncoated. This feature allows following the same trajectory when performing the measurement process before and after the coating operation.

Therefore, not only the geometrical parameters of threaded objects with or without a coating can be measured, but also the quality of the coating deposition process can be verified and assessed.

**Brief description of the figures**

The present invention will be now described according to a preferred embodiment thereof, which is given by way of non-limiting example, by means of the accompanying figures where:

Figure 1 shows a schematic axonometric view of a part of a measurement device according to the invention,
Figure 1a shows a perspective view of a measurement device in accordance with the invention. ,
Figure 2 is a flow chart showing a scheme of a measurement method performed by the measurement device of the invention,
Figure 3 is a graph showing results of a step in the data acquisition procedure,
Figure 3a shows a detail of a threaded object which can be measured by means of the device according to the invention,
Figure 4 is a graph showing a further step in the data detection procedure,
Figure 5 shows a scheme of a thread longitudinal section where measurements are made by means of the device according to the invention,
Figure 6 is a graph showing results of further steps in the data acquisition procedure,
Figure 7 are graphs showing hypothetical assignations of load flanks,
Figure 8 are graphs showing results of spiral scans,

Figure 9 are graphs showing results of seal scans,

Figure 10 shows a scheme of the threading on which the device according to the invention can be used,

Figure 11 are graphs showing results of thread root scans,

Figure 12 are graphs showing results of thread crest scans,

Figure 13 shows schemes of the threading on which the device according to the invention is used,

Figure 14 are graphs showing results of thread run-in scans,

Figure 15 are graphs showing results provided by the device according to the invention,

Figure 16 shows the step height calculation on a thread using linear fitting of crests and roots.

Figure 17 shows a graph with the results of another thread scan,

Figure 18 shows a schematical layout of the measurement device of the invention,

Figure 19 shows an enlarged lateral view of a detail of the measurement device of the invention,

Figure 20 shows an axonometric view of the detail of fig. 19.

## Detailed description of preferred embodiments of the invention

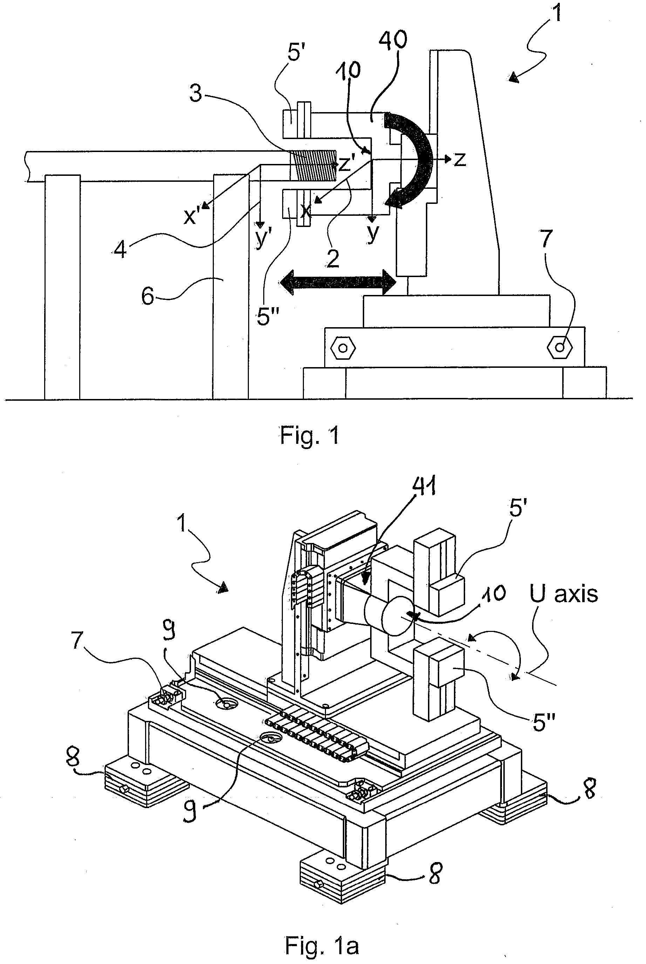

With particular reference to the figures 1 and 1a, there is shown schematically a first part of the measurement device according to the invention, together with the second part incorporating the electronic and computer hardware that constitute the measurement device of the invention. The first part containing the laser displacement sensors and the pipe support, is defined conventionally as the measurement hardware 1 of the measurement device of the invention, to distiguish it conventionally from the electronic hardware. This measurement hardware has its own Cartesian reference system 2, defined by the orthogonal axes X, Y, Z. A threaded portion of a pin 3 to be measured is shown on the left of the figure. This pin has its own Cartesian reference system 4 defined by the orthogonal axes X', Y', Z'. In the figure 1 the pin is positioned far from the measurement device in a rest position on a bench 6.

In the following description of the invention, for the sake of simplicity, reference is made to a pin 3 of an oil or gas pipe, as object to be measured, however it is appreciated that the invention can have an application also for any other similar threaded objects, like screws or similar objects. The measurement device has also a particularly advantageous application in those cases where a coating is present on the measured object.

After initial installation of the measurement hardware, the pin 3 is mounted on the measurement device 1 to perform the measurement operations, the respective pin 3 and measurement device reference systems are placed as close as technically possible one to each other using the horizontal and vertical angular and lateral displacement movements provided by the device (see fig. 1). Nevertheless, despite all possible care, the two Cartesian reference systems will not coincide exactly and small misalignments, both in the angular and in the lateral position of the reference system 2 of the pipe, with respect to the measurement device may still exist. Even more, when another pin 3 is successively positioned on the measurement hardware 1, its angular and lateral positions will differ from the previous pin due to placement errors and geometrical differences (e.g. hook end) between the pieces. Due to these reasons, under operative conditions the misalignment of pins, or more generally of the threaded parts of pipes, with respect to the measurement device, can be of the order of millimetres in the linear displacement and in the order of one degree in the angular displacement. Only by adjusting the position of every pin, a smaller misalignment value could be achieved, however, that scenario is impractical in reality. The invention achieves the objective of the device working without any lateral or vertical adjustment of the knobs 7, shown in figures 1 and 1a, after initial installation.

The measurement hardware 1 comprises two laser displacement sensors 5' and 5" mounted on a yoke piece 40 advantageously machined from a single aluminium piece to minimize mechanical movements. This yoke piece 40 is mounted on a rotational stage, able to pivot about a U-axis, and belongs to the head 41 of the measurement device, together with the laser sensors 5' and 5". Each sensor 5', 5" is mounted on an X-stage that can move in the radial direction i.e. the X-axis, by means of linear rotary motors, not shown. Angular and linear movements of the stages parallel to the Y axis and orthogonal to the X axis allow each stage to be aligned along the same line. Both laser sensors 5' and 5" can also be adjusted by lateral and angular displacements to align the center of the laser beams with respect to the center of rotation of the head 41.

The X stage can be motorized so that it can be used for an automatic change of pipe 3 diameter while maintaining the sensors 5' and 5" always within their range. The head 41, in this preferred embodiment is particularly suitable for measuring operations on pin having a male external threading.

Finally, there is provided a third linear stage, (moving along the Z-axis) that allows displacing the head parallel to the device Z axis. The third linear stage, movable along the Z-axis, is mounted on a base that is hardcoated on the bottom to allow smooth displacement with respect to the base when the device is set up for the first time, as shown in figure 1a. Four knobs 7, e.g. placed one on each corner, allow for horizontal angular and lateral displacement in a plane. There are provided screws 9, or equivalent means, to fix the measurement hardware 1 to avoid movement of the head 41 once the initial alignment has been accomplished. There is provided advantageously a wedged pad 8 on each of the four legs to regulate height and out-of-plane angular alignment.

All these regulation possibilities provide easy initial installation of the device in a pipe manufacturing plant, allowing for small corrections to levelling tolerances, to conveyer alignment and to imperfections in the levelling of the plant floor.

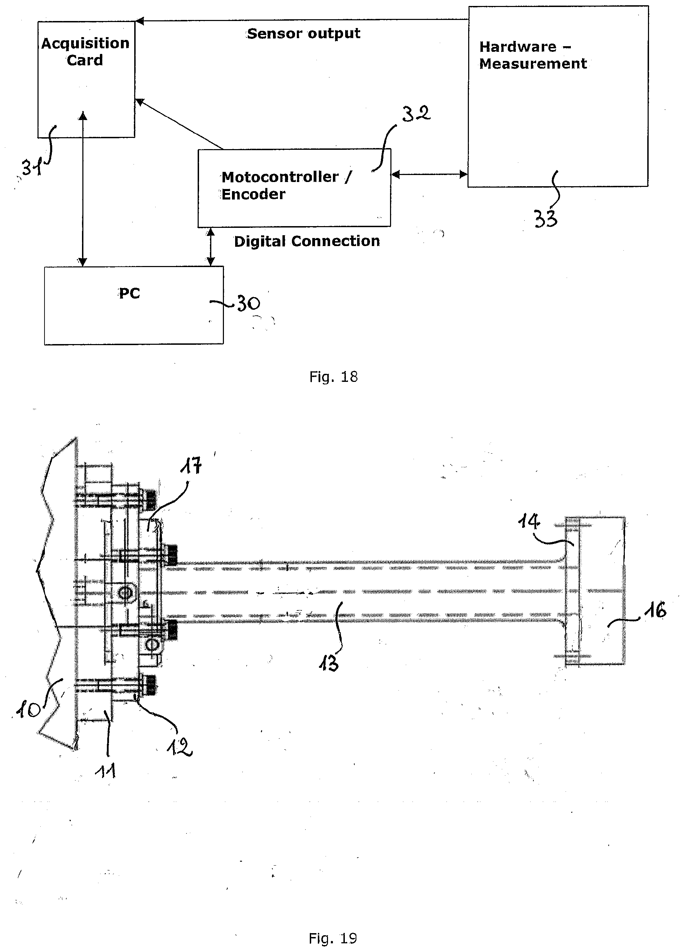

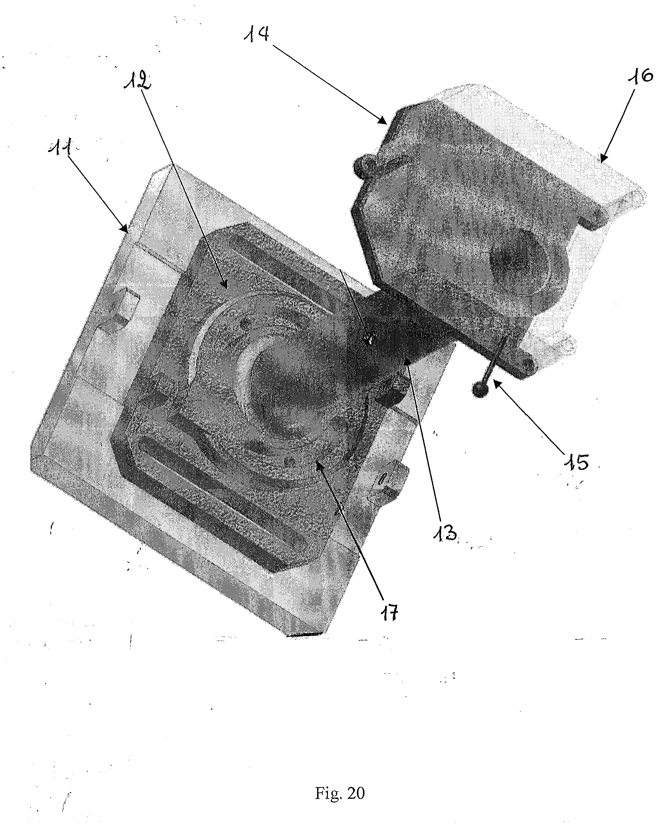

With particular reference to figures 19 and 20, another advantageous embodiment of the head 41 provides for a solution allowing also measuring operations of the internal female threading on the box.

On the central part of the yoke 40 there is mounted a laser sensor support comprising a fixation plate 11 and an intermediate plate 12 forming a base for a support 13, e.g. made of a tubular element. Preferably a circular flange 17 is provided to fix the support 13 to the intermediate plate 12. This circular flange 17 has two peripheral slide type fixation means, to allow angular regulation during the installation of the measurement device in a mill.

At the distal end of the support bar 13 in respect of the fixation plate 11, a support plate 14 is rigidly mounted on the support bar 13. Said support plate 14 is advantageously machined from a single aluminium piece to minimize mechanical backlash.

A laser sensor 16, comprising a laser source 15, is fixed to the support plate 14 by means of three locking screws. The support plate 14 is so designed that once the laser sensor 16 is fixedly attached to it, the direction of the laser beam emitted by the laser source 15 passes through the axis of rotation of the support bar 13, so that the laser beam is always perpendicular to the internal pipe surface.

This structure comprising plates 11, 12, support 13 and plate 14, together with the laser sensor 16, is solidarily mounted on the rotational stage 10, able to pivot about the U-axis, of the head 41 of the measurement device,.

The outer envelope of the laser sensor 16 and laser beam 15, entrained by the rotation of the yoke 40, is determined in such a manner that it fits inside the box without interfering or touching the internal surface.

Either the complete combination of the intermediate plate 12, support bar 13 and support plate 14 can be dismounted for necessities of tube diameter change, or alternatively only the support plate 14 with the laser sensor 16 can be be dismounted.

The embodiment heretofore described can be used for the sole measurement of boxes with female threading. In this case the head 40 of the measurement device can be equipped only with the sensor 16 and the associated support structure as shown in figures 19 and 20, without the presence of the sensors 5', 5" for external threading.

In another embodiment (not shown separately in the figures), it is foreseen to mount simultaneously on the rotational stage of the head 40 both the laser sensors 5', 5" for external threading, as shown in figures 1 and 1a, and the laser sensor 16 with the associated support structure, as shown in figures 19 and 20. When using a measurement device in this third embodiment one of the sensors is automatically disposed in the measuring position, e.g. the sensor for measuring internal threading. In that manner, having on only one machine two types of heads, in line with the threading machine, both pins and box ends can be measured alternatively in subsequent operations by replacing a box with a pin. Besides the described measurement hardware 1, the measurement device of the invention comprises also an electronic part comprising a computer 30, preferably a PC, to control the measurement operations that are carried out. The PC 30 is able to produce computer images of the thread shape of the scanned object, to store the images and to analyse the computer images to obtain quantitative information about thread characteristics below indicated.

The schematic lay out of the circuit interconnecting all parts comprised in the measurement device are shown in figure 18. The PC 30 is connected by means of a digital connection to an encoder/motocontroller 32 and also to an acquisition card 31. The encoder 32 in turn is connected on one side to the acquisition card 31 and on another side to the measurement hardware 33, thus creating an intermediate connection between PC 30 and measurement hardware 33. The measurement hardware 33, which schematically represents substantially the hardware indicated with reference 1 in figures 1 and 1a, is connected to the acquisition card 31 by means of data connectors to transmit sensor outputs and signals to the PC 30 over the acquisition card 31 that communicates with the PC through a PCI bus. These outputs are collected at a designated rate and sent to the acquisition card 31 through a digital connection. The acquisition card 31 also acquires signals coming from the motocontroller/encoder 32 and enabling signals. The PC 30 communicates with the motocontroller/encoder 32 through a digital link for setting parameters and loading/running of CNC (Computer Numerical Control) programs. Encoder signals and servo-control signals of the three stages of the head 40 are wired to the controller using cables and connectors.

Besides the measurement hardware 33, the other parts comprised in the lay out of figure 18 can be integrated in an electronic board associated to the PC 30, which can be placed close or far from the measurement hardware 33, depending on necessities of operators.

A spatial synchronization between non-contact sensors and their special position is performed as to which the encoder 32 detects the angular position of the sensors, and through that spatial position, derives the exact space position of the sensors at each instant, during the whole measurement procedure.

Another advantageous embodiment of the measurement device according to the invention provides for a temperature compensation system, by means of which, the effects of temperature can be alleviated, and measurements can be referenced to a "reference temperature" and not to the temperature in which the measurement was made. Temperature measurements are performed on the pipe, the cabin and the measurement device allowing to correct undesirable temperature effects using a look up table of precalibrated correction values.

The manner in which this measurement device is used to perform measurements on threaded objects is described hereafter. After the initial installation is carried out, as described above, a typical measurement operation comprises two main parts: data acquisition and data analysis. Although measurement procedures are described for external male threads on pins, the same procedures are applicable to female threads on boxes by making the appropriate adaptations, in particular by replacing the functions of the sensors 5', 5" with those of sensor 16.

The data acquisition procedure is now described. During this procedure the laser sensor output signals and positions of servos are stored in a synchronized manner ensured by the use of hardware signals to enable windows and counters. Below, a description is given of the signals used.

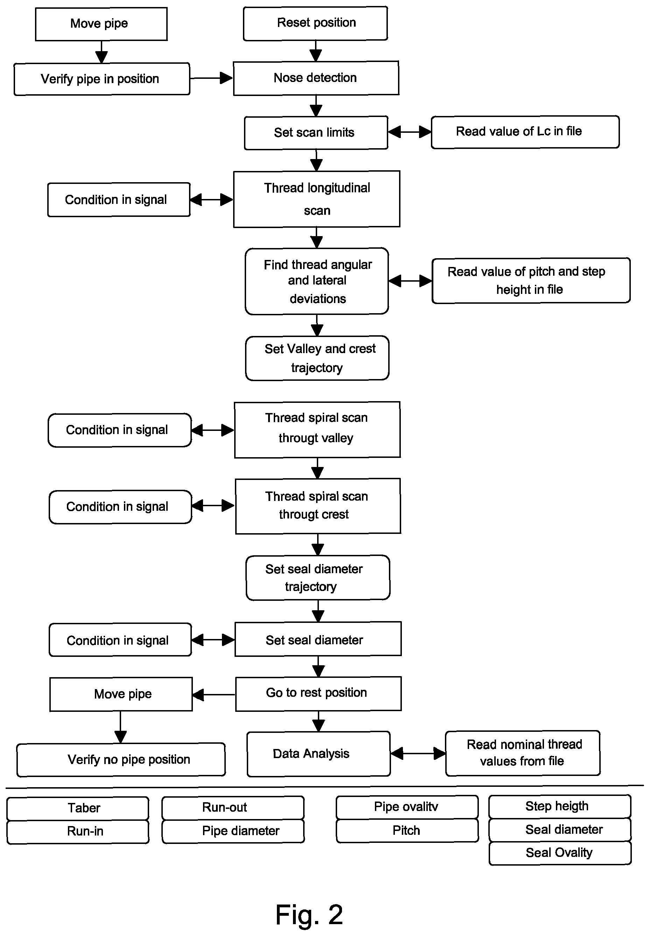

Figure 2 shows, by means of a flowchart, the general working scheme of the data acquisition procedure governing the whole measurement process once the initial calibration and plant installation has been performed. It starts by verifying that the pipe is in position aligned to the measurement device, then the measurement device executes a first longitudinal scanning operation along the threaded portion of the pipe to find the relative position of the pipe nose with respect to the frame of reference of the measurement device. After the relative position of the nose is detected, all distances reported during measurement are referred to that point. If the measurement operation of the threaded pipe provides for only one scanning operation, the data are gathered only in correspondence with points belonging to the path followed by the sensors 5' and 5". This is generally done because the data collected are considered sufficient to the needs of the users.

If the measurement procedure on the threaded object provides for several scanning operations along several trajectories on the coated or uncoated surface of the threaded portion, data are also collected on predefined points along these trajectories. The choice of the measurement points where data are gathered is made in such a manner that a matrix that describes the quadratic form has maximum rank when values corresponding to these points are inserted in it.

In a preferred embodiment of the method according to the invention, a plurality of longitudinal profiles, e.g. six, are scanned at equally spaced angular steps. Data gathered by means of these scans are processed to remove spurious peaks and pass encoder counts to physical units and are then used to calculate a first estimation of the thread angular misalignment with respect to the measurement device frame of reference and reassign the nose position by averaging the six nose positions corresponding to the six scans.

These scanning operations are also used to detect the positions of the crests and roots of the threads and define a spiral trajectory table, by interpolating this information, so as to allow successive scanning operations over the center of the crests or roots of the thread. Data acquired by means of those spiral scanning operations are also conditioned and used to measure more precisely the misalignment in respect of the thread frame of reference. After this operation, and having detected the orientation of the thread, a table for the seal or seals, run in and run out trajectories, can be constructed in the reference frame of the piece (X',Y',Z') and transformed to the device coordinate system and executed.

After the end of the scanning operations, the head of the measurement device returns to its rest position and data analysis begins in order to obtain all the parameters of the thread under test.

The specific measuring operation when the object to be measured is a coated pin follows the procedure now described. The pin 3 is then dismounted from the device 1 and, at a subsequent moment in time, a coating operation of the threaded object is performed in an appropriate place. One or more layers of coating material are laid on at least part of the pin threading and/or surface. The coating can be laid also on specific surfaces of the threading, like thread crests, flanks or roots by means of any known technology.

When the coating operation is performed, the pin 3 is again mounted on the device 1 or similar device and the measurement steps described above are replicated on the same predefined trajectories on the surface of the threaded portion, and data are again collected on the same predefined points along these trajectories, which were selected before the coating operation, and the same calculations, as already described, are again performed. Consequently a comparison of the data acquired before coating and after coating is carried out and, in this manner, the thickness of the coating at all measurement points of the pin is calculated.

The measurement procedure described before in broad terms is hereafter described in detail by splitting it into several steps and indicating various embodiments of the measurement method of the invention for calculating a series of specific parameters of the threading. This procedure applies to both stages, before the pin is coated and after the pin has a coating laid on its surface, and it can be appreciated that the measurement method of the invention can be advantageously applied to the cases where coating is made in successive distinct layers, to measure the quality of the intermediate layers and of the final layer resulting from the superposition of various layers.

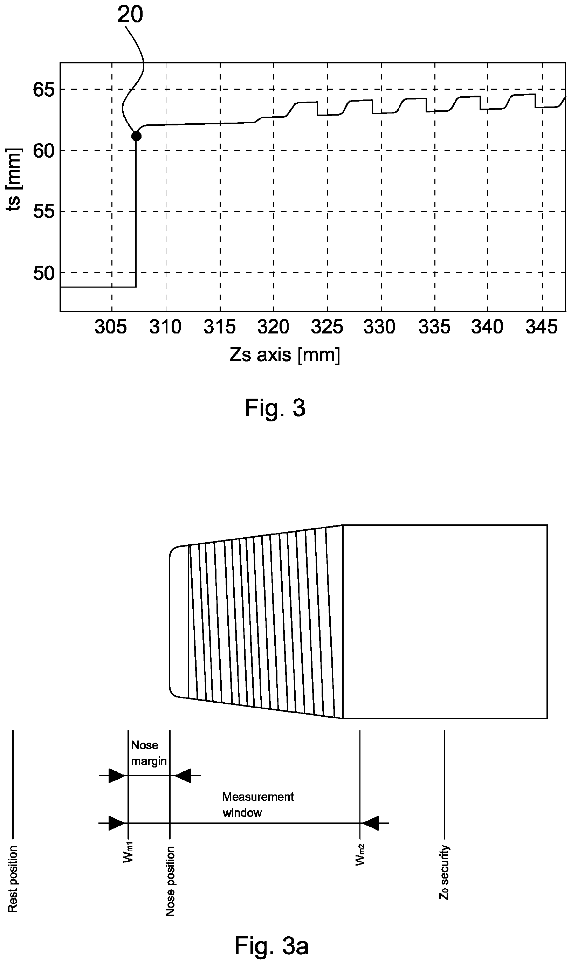

The first step of the data acquisition is nose detection, which consists in executing a linear scan along the Z-axis between two reference distances where the nose is estimated to be located. It will be appreciated that this linear scan can be the only scanning operation predefined in the measurement method, or it can also be the first scanning operation of a plurality of successive scanning operations. The signals provided by the laser sensors 5 are further analysed by making a check of the presence or absence of Out Of Range (OOR) values. An OOR value consists of a non-valid point (i.e. out of the physical range of the sensor), as sent by a sensor when no object is found in the measurement range of the sensors. These signals are processed by defining a sampling window of e.g. fifty data points and verifying that all samples are not OOR. The number of data points depends on several factors like the shape of the pin surface, the type of threading, the type of joint, etc. and can certainly be either above or below fifty. The sampling window is then moved one step further and the values of the signals sent are checked again until all samples in that window are recognised as valid data points after processing. The first sample of that block is defined as the nose position of the pin. The graph of Figure 3 shows the results produced by a scan during nose detection. It shows OOR values previous to the encounter of the laser sensors with the pipe nose, the dot 20 indicating the position, with respect to the Z axis, where the nose has been detected. After this point has been detected, scanning is stopped, and the following step of the data acquisition procedure is started.

An accurate determination of the nose position is not necessary for measuring most of the thread parameters of interest that are based on relative distance measurements, except when it is necessary to measure pipe and seal diameters. These parameters are measured at a precise distance relative to the nose position because the thread taper changes its values if measured elsewhere. After the position of the nose has been determined, in those cases where this detection is necessary, several longitudinal scanning operations, e.g. three (but a greater or smaller number are possible), are performed along the Z-axis direction by acquiring outputs at the same time from both laser sensors 5', 5". A definition of the limits of the scanning range window is represented generically in Figure 3a .

From its resting position, the head of the measurement device is driven back to the first position of the measurement window indicated by Wm1, corresponding to the nose position, which is at the end of the nose margin.

When the sensors are placed in position Wm1, a movement towards security point Zo is indicated and the window signal that resets encoder counts is enabled. The number of encoder counts to be acquired by the laser sensors is preset to fit into the measurement window longitude. When this preset number is reached, the head of the measurement device is commanded to stop at the point indicated by Wm2. In this manner, the measurements from the laser sensors 5', 5" together with encoder counts are acquired in the measurement window segment. Longitudinal scans are subsequently implemented in the inverse direction. Similar limits for encoder counts to be acquired by the laser sensors are set also for these movements in the opposite direction. This movement in the reverse direction towards the rest position starts from point Wm2 and ends in point Wm1, where it stops after having reached the predetermined encoder counts to fit the measurement window.

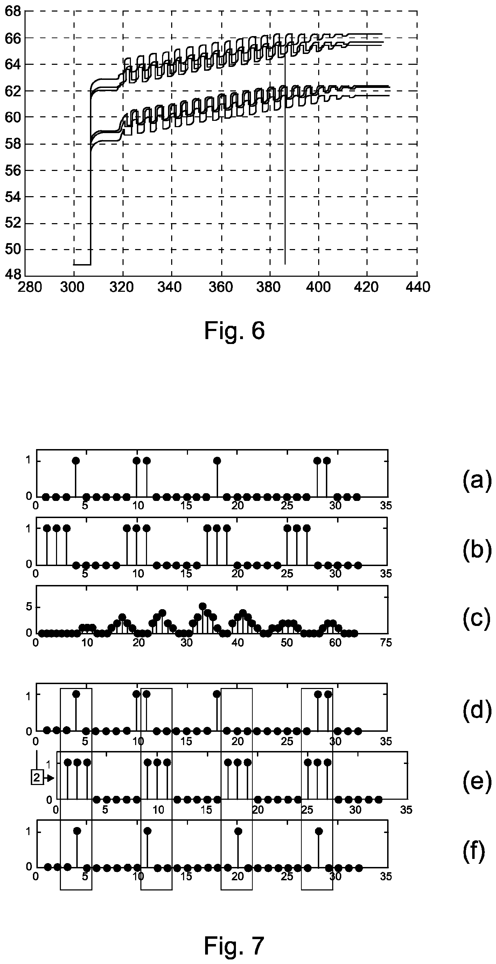

Figure 6 shows a typical longitudinal scan where signals generated by both laser sensors 5', 5", placed at an angular distance of 180° apart, are acquired. In this example the three scans result in six profiles, i.e. two groups of three profiles, each corresponding to one of the laser sensors 5' and 5", of the thread under test, and are useful for giving a first estimation of the thread misalignment. If necessary, the device 1 can be operated with only one of the two laser sensors 5', 5" detecting signals emitted by one laser beam.

The quantity of scans, given here by way of example, can also be more or less than three, depending on the object to be measured and depending on the parameters that are sought. In these particular cases, pitch and step height along six generatrices are the parameters sought.

Another variant of the measurement method provides for a data acquisition operation consisting of detecting selected points on thread crests and roots made by performing a number of longitudinal scans parallel to the Z axis. Data collected from these scans also enable points to be determined on thread roots and crests that are used for the definition of trajectories along which two subsequent spiral scanning operations are performed, one along the thread crest and the other one along the thread root. By being generated previously in this manner, the trajectory avoids falling off the crest or climbing out of the root during the scanning operation when the object is misaligned with respect to the X', Y', Z' co-ordinate system.

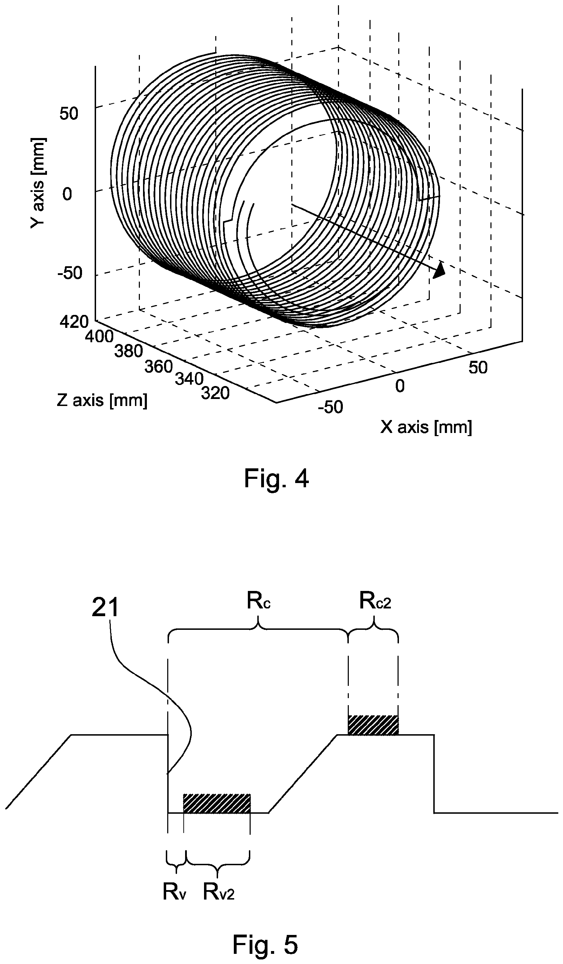

The first step of this measurement operation starts by detecting thread load flanks, consisting of detecting load flanks for each longitudinal profile. This is performed by differentiating the whole data vector and evaluating values that override a preset threshold. A vector containing all zero values is generated, excluding those detected points which are candidates for indicating the presence of a load flank. Another vector is generated which represents a theoretical comb with teeth of a specific detection width and nominal pitch separation between the teeth. These two vectors are cross correlated in order to find the relative position between the comb and the load flank 21 candidate vector that maximizes the cross correlation (see fig. 5). The cross correlation consists of performing a scalar multiplication of the two vectors and finding the sum of the resulting vector while changing their relative vector index.

Subsequently load flanks 21 are assigned in correspondence with the points found as candidates for each comb tooth according to the following criteria:

- If one candidate flank is present (which is defined as type 0): this flank is a real load flank.

- If no candidate flank is present (type 1): a flank is created just in the middle of the thread comb interval for the purpose of producing the spiral trajectory.

- If more than one candidate flank is present (type 2): there are spurious flanks in the thread comb, so the nearest to the middle point of the thread comb interval is determined as the real load flank. The remaining ones are dismissed.

- If an out of range is found in the interval (type 3): the flank is discarded and a virtual flank is created for the purpose of producing the spiral trajectory.

Figure 7 shows hypothetical load flank candidates and comb vectors in the three mentioned cases possible for assigning loading flanks.

Another variant of the measurement method provides for assigning points along crests and roots, wherein the crests and roots segments are defined following the thread mechanical drawings with the parameters Rc, Rc2, Rv and Rv2 as shown in Figure 5.

Each segment is conditioned by filtering OOR and possible peaks taking into consideration that the segment should be a line. Then, the point corresponding to either root or crest is calculated as the mid segment point.

Figure 7 shows a longitudinal scan where those points detected as being root and crest points are indicated. Graph (a) shows the candidates for load flanks, graph (b) shows the theoretical comb, graph (c) shows the cross-correlation, graph (d) shows candidates for load flanks, graph (e) shows the displaced theoretical comb, graph (f) shows assigned load flanks. As can be seen in this Figure, points are generated by extrapolating the determined points in the threaded portion for location prior to the nose position, and after the end of the thread where the non-machined part of the pipe starts. This is done to smoothly enter and emerge from the threaded portion during execution of the spiral scan, to obtain the phase of the thread relative to the measuring device frame of reference, to estimate the position of the black crest, to calculate the lathe eccentricity axis, and to measure the pipe hook end.

All the root points determined in each longitudinal scanning operation are also used for fitting a quadric surface representing the cone of the thread being analysed so as to gather a first estimation of the thread angular misalignment with respect to the measurement device reference frame. Crest points are preferably not used in this calculation for two main reasons:

   a) the determination of these points is more inaccurate than that of root points, (i.e. the portion of the pin where determination of the roots is performed is longer) and
   b) the number of root points over the thread surface cone is higher than that of the crest points due to the presence of "black threads" generated in the manufacturing process.

The generic matricial form of the quadric surface is described in formula [1].

$$\overline{x}^{t}.A.\overline{x} + \overline{b}.\overline{x} = 1 \qquad\qquad [1]$$

where $\overline{x}=[x,y,z]^{t}$
is a point of the quadric in the 3D space, A is a symmetric matrix related to the quadric (it is formed by nine parameters, three for translation, three for orientation and three for the quadric form as expressed in a canonic frame) and $\overline{b}$ is the quadric displacement vector.

The selected data is fitted to the expression shown in [1] by using a least squares approximation, from which the parameters of the quadric (e.g. the parameters that conform to A and $\overline{b}$) are obtained.

These data are useful for the conformation of a linear transformation and its inverse transformation between the measurement device and thread reference frames.

The subsequent operation consists of spiral scannings, both along root and crest of threads. The information acquired before relating to the root and crest mid point positions, for each longitudinal scan, is interpolated and used to build two spiral scanning tables. All of the root mid points are transformed to the thread coordinate frame. Afterwards, a linear fit is performed over the data resulting from a t vs. Z arrangement. Subsequently, a new set of points is generated segmenting the fitted line with a regular step. These points are transformed back to the measurement device reference frame and passed to a controller for the calculation of the servo references. The same procedure is applied on the crest mid points for generating the crest scanning table.

Preferably, the root scan is executed starting from the nose while the crest scanning is executed in the opposite direction, considering the Z-axis. Figure 5 shows a typical root and crest scanning expressed in respect of the measurement device reference frame. Data obtained from the root spiral scan are used to calculate a better estimation of the measurement device to thread misalignment that is also used to recalculate the transformations between reference frames that are applied in the data analysis.

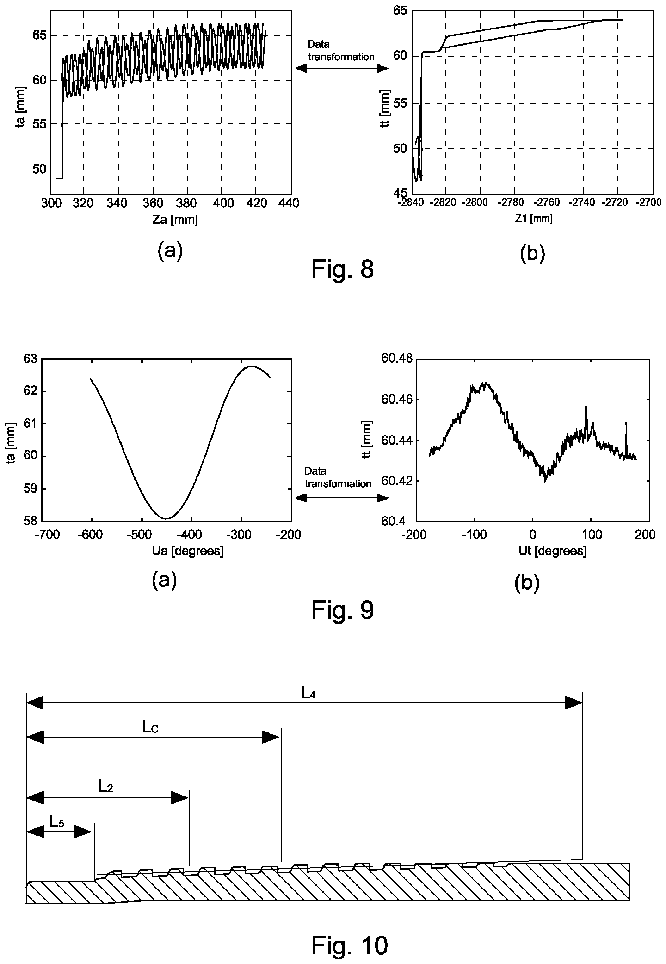

Figure 8 shows the t vs. Z graphs for the measurement device reference frame, graph (a), as data are acquired and for the thread reference frame, graph (b) transformed using the misalignment estimation calculated from the spiral scans. The graph (a) of figure 8 shows on the left what the effects of misalignment are on the acquisition procedure.

In a specific embodiment of the measurement method a data acquisition procedure provides for scanning the seal of the thread. In this case, an ideal circular trajectory is generated with reference to the thread reference frame at a predetermined distance from the nose and then transformed to the measurement device reference frame for its execution. Figure 9 shows two graphs containing the results of a typical seal scan, where graph (a) shows the scan expressed in the measurement device reference frame and graph (b) shows the scan in the thread reference frame.

This scanning trajectory must be executed starting at a predefined distance from the pin nose and in alignment with the threaded object because the nose profile may be complex and the radius measured may be highly dependent on the exact position measured. A good estimation of the nose position is calculated when a plurality of scans is made, e.g. six. In this example, the nose position detected on each of the six longitudinal scans is retrieved. These data are then transformed to the thread reference frame and averaged to get a single, more accurate, nose reference.

In another embodiment of the measuring method the phase of the thread with respect to the device reference frame is retrieved from the spiral root scan and a longitudinal trajectory is set in the thread reference frame such that it passes through the measuring points determined in the inspection report for the measurement of the run-in. Similarly, a trajectory is set for the points defined for the measurement of the run-out.

After data acquisition operations are completed, data analysis is performed on the acquired data, but transformed to the thread reference frame, as a final part of the measurement method. Unless indicated differently, in the following all data are expressed on the threaded object reference frame.

Most of the parameters are indicated in relation to different length references taken on the thread and referenced to the nose position. Figure 10 shows the three main references used in data analysis that will be referred to below.

L5 is the length to the beginning of the thread;
L2 is the reference length for the thread diameter and ovality calculation;
Lc is the minimum length where the thread parameters must fulfil the tolerances;
L4 is the length to the end of roots and crests, which is lower than the pull-out length where the run-out is measured.

Determination of the taper is one operation of data analysis. The equation that describes the outer surface of the cone thread is the following.

$$t_{thread} = \left( R_0 - A \bullet Z_{thread} \right) \qquad [2]$$

Where tthread and Zthread are the radial and azimuth coordinates in the thread frame of reference,
Ro is the primitive radius and A is the taper of the pin threading.

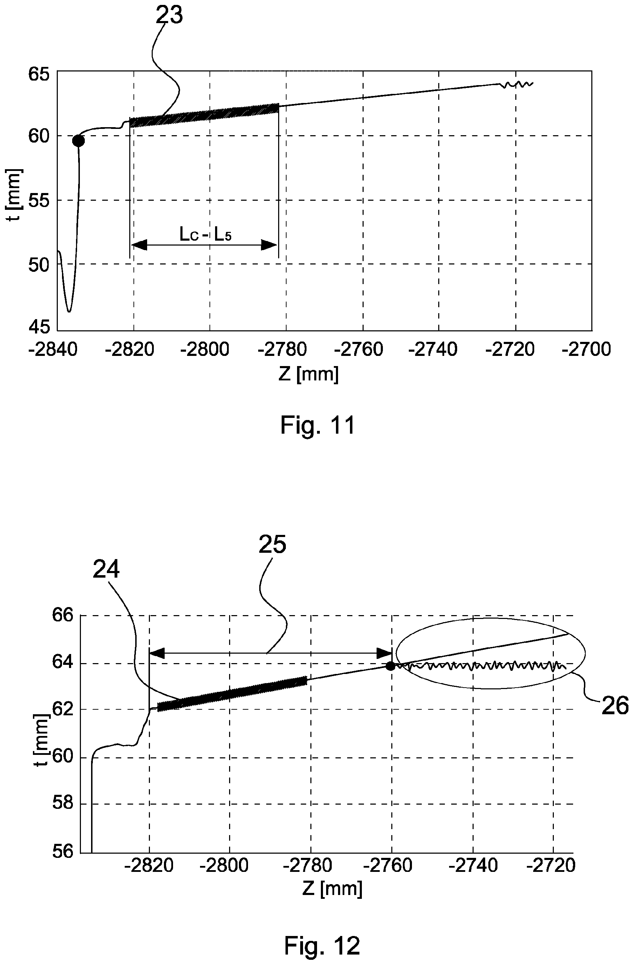

To calculate the taper, the t vs. Z relationship from the root scan of the thread is used. Data acquired previously between L5 and Lc, corresponding to segment 23 of the curve, is analyzed as shown in Figure 11. A linear fit is performed over these data 23 to calculate the slope, comprising the values of taper and of A. The deviations of the data with respect to that linear fit are calculated. Those deviations contain information regarding the machining process, e.g. the non-compensated forces due to the change in pipe stiffness along the thread object and the over tightening of the pipe on the lathe. This information can be retrieved using a Fourier modal analysis as a function of the thread position. For example a large three-mode means overtightening of the pipe on the lathe, while a parabolic behaviour of the fundamental mode means that the tool was taken before the end of the Lc.

Full thread length, corresponding to the segment 25 of the curve of figure 12, is analysed considering the data gathered from the crest scanning. First a linear fit is performed using the acquired, and filtered, data between L5 and Lc, corresponding to segment 24. Deviations of the data with respect to the linear fit are calculated. Subsequently those values over L5 that are more than 0,1 mm greater than this linear fitting are identified, corresponding to segment 26 of the curve in Figure 12. With these values, a new linear fit (using the Z positions and the errors) is performed and the zero abscissa is calculated. This value is defined as the upper limit for the full thread length as shown in Figure 12. Further analysis can be done using the non-machined part of the pipe shown in figure 12. These values correspond to the pipe with a "virgin" surface and can provide information on the position of the thread with respect to the pipe at the moment of machining the part. For example, if the lathe has its plate misaligned, the thread will be off-axis with respect to the pipe, or if the pipe has a hook end the pipe and thread axis will not be parallel. Those variables can be easily calculated by finding the transformation between the pipe and thread coordinate systems.

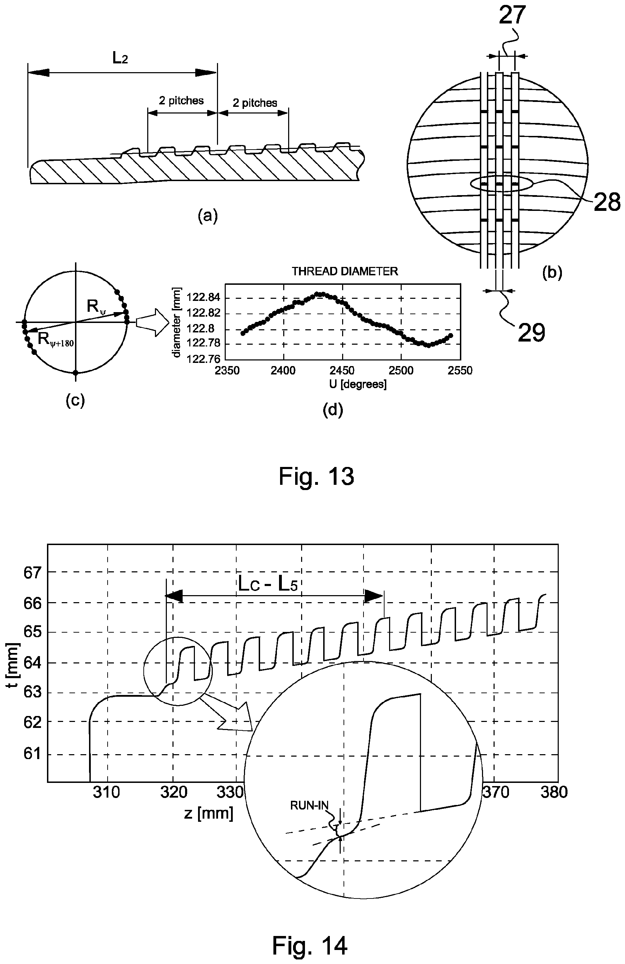

Another data analysis operation relates to calculation of thread diameter and ovality. Thread diameter and ovality are evaluated in two ways using the root spiral scan. The data being analyzed are those comprised in the zone corresponding to L2 $\pm$ 2 thread pitches. Root points defined in this zone, cf. Figure 13 (a) showing the thread lateral view in section , are linearly fitted, after which this fitted linear function is evaluated to obtain the radius.

Alternatively, root points for each radius determination are performed on generatrices equally spaced, advantageously at angular distances 27 of three degrees. On each generatrix, data for each root are averaged considering a generatrix width 29 of typically, but not necessarily, 5 degrees, cf. Figure 13 (b) showing a thread top view. This implementation is similar to the mill procedure used with the MRP gauge.

Radii of defined points, cf. circle 28 of fig. 13(b), are calculated for generatrices ranging from 0 to 180 degrees, with steps of 3°, together with the opposite generatrices for diameter calculation as shown in Figure 13(c), illustrating a thread frontal view. Successively thread diameter and ovality are calculated by means of the following relationships:

$$Diameter = \left( D_{max} + D_{min} \right) / 2 \qquad\qquad [3]$$

$$Ovality = \left( D_{max} - D_{min} \right) / 2 \qquad\qquad [4]$$

where Dmax and Dmin are the maximum and minimum diameters calculated through this process respectively. The results are shown in the graph 13(d).

Another operation in the data analysis procedure is run-in evaluation and this is derived from a longitudinal scan done in respect of the thread reference frame.

Figure 14 shows one of these scans which details the region in which the run-in is calculated.

First, a linear fit is performed with unfiltered root data points between L5 + pitch and Lc. This fitted line is compared with the root data included in the segment defined by Rv and Rv2 as shown in Figure 5 and referred to L5. A linear fit is performed over the error array resulting from that comparison. Then, the difference between this fitting, evaluated at the root mid segment value, and the previous fitting is defined as the run-in value.

Subsequently a run-out analysis is carried out in a similar manner to the operation performed for the run-in.

Yet another operation is a pitch determination wherein the load flanks generated from the longitudinal scans are analysed.

The vectors containing the load flank values for each longitudinal scan are truncated so as to keep the flanks between L5+pitch and Lc. Of these flanks just the flanks of type 0 are accepted. The remainder of the types are discarded, being considered unreliable as real load flank identifications.

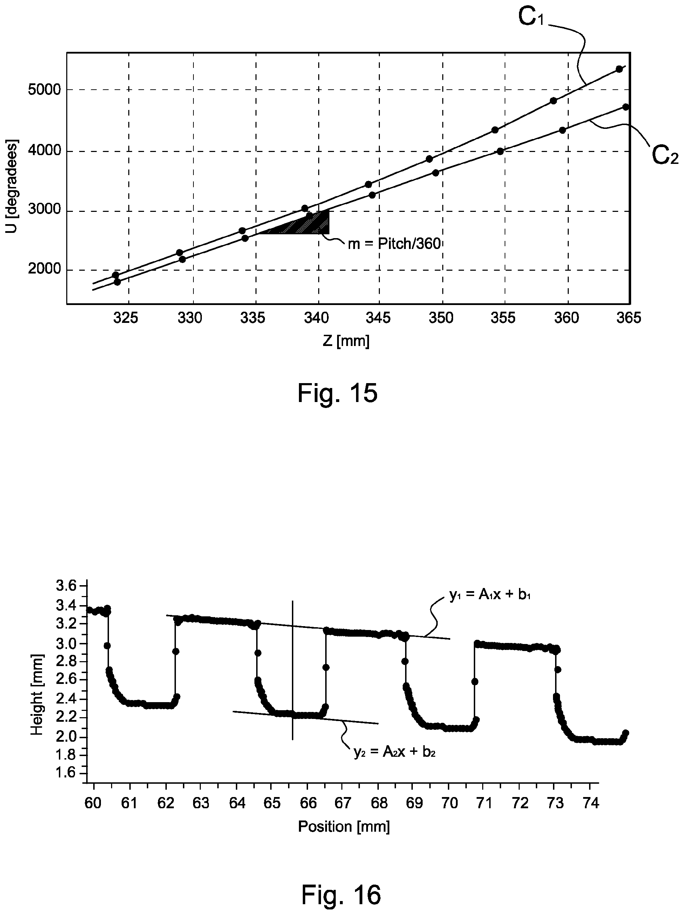

Figure 15 shows a hypothetical longitudinal scan and the positions of the load flanks identified. The curve $C_1$ is how this would be if expressed in a measurement device reference frame where the effect of misalignment is noticed in the curvature (quadratic form) of the flank position trend, due to "falling-off" of the thread generatrix. This effect is also visible in the increasing separation between flank positions as the Z scan position grows.

To calculate the thread pitch, data must be transformed to the thread reference frame, indicated by C2 in the figure. Data expressed in that frame have a linear trend where flank positions may not be equally spaced but the slope of the linear fit is the thread pitch.

There are two types of pitch that are calculated and obtained by the software:

A first pitch calculated from the slope of the linear fit for all the flanks detected.
A second pitch calculated from the slope of the line formed by two flanks whose separation depends on the thread being analysed (this measurement must be done in relation to the number of threads per inch).

It will be appreciated that the data obtained gives information on the pitch for each longitudinal scan.

The measurement method performed by the device of the invention is particularly advantageous for measuring threading having a wedge profile, i.e. a profile that has a progressive increase in tooth width and more particularly when the wedge profile is combined to a dove-tail shaped tooth profile in an axial section.

In the case of a wedge thread with a dove-tail tooth profile, the measurement of crests and roots provides for a spiral scan as described above wherein the spiral trajectory follows a line corresponding to the middle position set along the middle distance between the load and stabbing flanks or any other spiral trajectory parallel to said middle position.

In state-of-the-art methods the measuring and controlling of wedge threads provides also that all measurements are taken from a reference point that is conventionally called bolt point. The ball point is defined by passing a bolt, i.e. a measurement element having a small rolling ball of predetermined diameter, along the roots and setting the point where the bolt remains stuck in the root, because the tooth width is variable along the thread. The distance and generatrix at which the bolt point is located with respect to the front of the tube determine the reference point for measuring all parameters of a wedge thread.

According to the measurement method this operation of setting the bolt point does not need to be performed because the threading parameters are measured from a reference point that is located at the end of the tube.

The determination of this point is based on detecting all load and stabbing flanks in the spatial reference system of the measurement device (X, Y, Z) and then express them in the spatial reference system (X', Y', Z') of the pin using the axes transformation matrix to convert all data retrieved from one spatial reference system to the other spatial reference system, as described above.

Once the flanks positions are expressed in the spatial reference system (X', Y', Z') of the pin, a linear fit is performed on the "Zr-Ur" plane where Zr is the axial position of the flank and Ur is the flank generatrix. This linear fitting is performed for all load and stabbing flanks of the threading separately.

Finally, a subtraction is performed between the two lines adjusted, described in the previous paragraph, and obtaining the "root width" for the whole thread and look for the value (Zr - Ur) of "root valley" where the bolt is stuck in the root for a wedge effect.

The measurement method for a wedge profile includes also a "Higbee" measurement. The Higbee is conventionally defined as the cut of the first incomplete thread adjacent to the bevel made at the nose of the pin where its intersection with the thread load flank makes a sharp edge. The Higbee corresponds to the removal of the incomplete starting thread (of many types of thread, not only wedge) on tube end, with outer diameter OD $\geq$ 5in. The Higbee removes the starting thread from where thread height is zero, until the thread crest starts, i.e. until where the thread height reaches the acceptance value, and the intersection between the Higbee and the crest of the thread defines a line, parallel to the taper. The arc length of the Higbee is approximately 180$\underline{o}$.

Higbee length and height have to meet fabrication tolerances, and depend on the OD and type of connection. Higbee height can be 0, this is to say that the machining tool can reach the root of the thread.

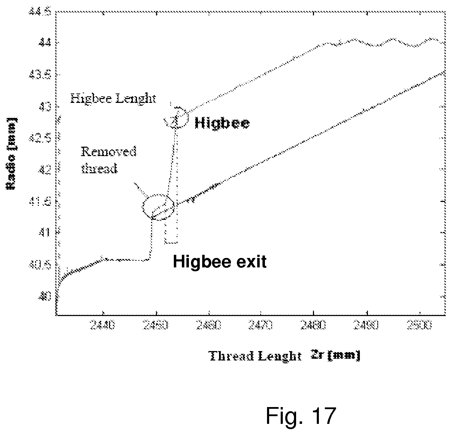

The Higbee point detection is made by adjusting data retrieved from the spiral scan performed on the crest of threading and fitting it to a line and then eliminating from said line all points that are in an area close to the Higbee, when the error between the fitted line and data is greater than some threshold. This point is shown in the graph of figure 17.

The order in which the operations described above are made can vary as well as the number of operations, depending on the necessities and on the parameters to be measured. The completeness of the measurement operation provides also for a calibration of the measurement device before starting operation of the system after set up.

The data points obtained in the longitudinal scan can be further analysed to obtain the value of the step height. Data close to the edges are discarded and a linear fit between consecutive crests is performed, cf. figure 16. The fit is compared to the linear fit of the root and its depth is evaluated by calculating the distance between the line y2 at the center of the root. A similar procedure is performed to calculate the height of the crests, taking y1 as the center of the crest. From the depth and height of the roots and crests, the average and standard deviation are calculated, the incomplete steps are identified and the length of the thread estimated.

Yet another way to calculate the step height, in this case in a global manner, is to subtract a linear fit obtained from the crest and root spiral trajectories. This gives the difference between the inner and outer cones that represents the value of the step height. All variants of the measurement method above described can be carried out by means of the device according to the invention as defined in claim 1 and can also be applied to a pin after a coating operation and to a pin before coating.

**Claims**

**1.** A measurement device for measuring thread parameters of a threaded object and said measurement device defining a first spatial reference system comprising first co-ordinate axes (X, Y, Z), the threaded object defining a second spatial reference system comprising second co-ordinate axes (X', Y', Z'), comprising:

• at least one computer controlled laser sensor (5', 5", 16),
• a computer controlled mechanical moving system, on which said at least one sensor (5', 5", 16) is mounted, able to guide the at least one sensor (5', 5", 16) during scanning operations according to predefined scanning patterns, or trajectories, along which measurement points are selected such that a matrix that describes the quadratic form has maximum rank, when values corresponding to these measurement points are inserted in the matrix,
• means to synchronize output signals of the at least one sensor (5', 5", 16) with spatial positions of the mechanical system, and computer means to calculate said matrix that describes the quadratic form thereby representing the threaded object in the first spatial reference system, thus providing a relationship between the first spatial reference system and second spatial reference system, and to control the at least one sensor (5', 5", 16) in the scanning operations, to produce computer images of thread shape of the scanned object, to store the images and to analyze the computer images to obtain quantitative information about thread characteristics, in particular taper, seal diameter and ovality, run-in, run-out, thread diameter, pitch along multiple generatrices of the tube, and step height,
• an electronic circuit connecting the computer (30) to the mechanical moving system and to the at least one laser sensor (5', 5", 16).

2.  Device according to claim 1, comprising an encoder/motocontroller (32) and an acquisition card (31) connected to the computer (30) by means of a digital connection and wherein the encoder/motocontroller (32) and the acquisition card (31) are connected one to each other, whereby the acquisition card (31) also acquires signals coming from the encoder/motocontroller (32).

3.  Device according to claim 2, wherein the encoder/motocontroller (32) is adapted to detect the angular position of the at least one laser sensor (5', 5", 16), and through that spatial position, derives the exact space position of the at least one laser sensor (5', 5", 16) at predetermined times, whereby a spatial synchronization between the at least one laser sensor (5', 5", 16) and its position is performed.

4.  Device according to claim 2, comprising a temperature compensation system, adapted to compensate the effects of temperature on the threaded object to be measured.

5.  A device according to any preceding claim, wherein the mechanical moving system comprises a head (41) on which said at least one sensor (5', 5", 16) is mounted on two stages that can move in radial directions, parallel to X-axis and Y-axis and on a third linear stage, that can move in an axial direction parallel to the Z-axis.

6.  A device according to any preceding claim, wherein on the rotational stage (10) of the head (41) there is solidarily and centrally mounted a sensor (16), adapted to perform measurement on a threading internal to a pipe.

7.  Device according to any previous claim, wherein two sensors (5', 5") are mounted on an element (40) solidal to the rotational stage (10) of the head (41), adapted to perform measurement on a threading external to a threaded object.

**Patentansprüche**

1.  Messvorrichtung zum Messen von Gewindeparametern eines Gewindeobjekts und wobei die Messvorrichtung ein erstes Raumreferenzsystem definiert, das erste Koordinatenachsen (X, Y, Z) umfasst, wobei das Gewindeobjekt ein zweites Raumreferenzsystem definiert, das zweite Koordinatenachsen (X', Y', Z') umfasst, umfassend:

    - zumindest einen computergesteuerten Lasersensor (5', 5", 16),
    - ein computergesteuertes mechanisches Bewegungssystem, an dem der zumindest eine Sensor (5', 5", 16) montiert ist und das in der Lage ist, den zumindest einen Sensor (5', 5", 16) während Abtastvorgängen gemäß vordefinierter Abtastmuster oder -trajektorien zu führen, entlang denen Messpunkte gewählt sind, so dass eine Matrix, die die quadratische Form beschreibt, einen maximalen Rang aufweist, wenn diesen Messpunkten entsprechende Werte in die Matrix eingesetzt sind,
    - ein Mittel zum Synchronisieren von Ausgangssignalen des zumindest einen Sensors (5', 5", 16) mit Raumpositionen des mechanischen Systems und ein Computermittel zum Berechnen der Matrix, die die quadratische Form beschreibt, wodurch das Gewindeobjekt in dem ersten Raumreferenzsystem repräsentiert wird, wodurch eine Beziehung zwischen dem ersten Raumreferenzsystem und dem zweiten Raumreferenzsystem bereitgestellt wird, und zum Steuern des zumindest einen Sensors (5', 5", 16) in den Abtastvorgängen, um Computerbilder der Gewindeform des abgetasteten Objekts zu erzeugen, die Bilder zu speichern und die Computerbilder zu analysieren, um eine quantitative Information über Gewindecharakteristiken, insbesondere Konizität, Dichtungsdurchmesser und Ovalität, Einlauf, Auslauf, Gewindedurchmesser, Steigung entlang mehrerer Erzeugenden des Rohrs sowie Stufenhöhe zu erhalten,
    - eine elektronische Schaltung, die den Computer (30) mit dem mechanischen Bewegungssystem und dem zumindest einen Lasersensor (5', 5", 16) verbindet.

2.  Vorrichtung nach Anspruch 1, mit einem Codierer/Motocontroller (32) und einer Erfassungskarte (31), die mit dem Computer (30) mittels einer Digitalverbindung verbunden ist, und wobei der Codierer/Motocontroller (52) und die Erfassungskarte (31) miteinander verbunden sind, wodurch die Erfassungskarte (31) auch Signale erfasst, die von dem Codierer/Motocontroller (32) stammen.

3.  Vorrichtung nach Anspruch 2, wobei der Codierer/Motocontroller (32) derart angepasst ist, die Winkelposition des zumindest einen Lasersensors (5', 5", 16) zu detektieren und durch diese Raumposition die exakte räumliche Position des zumindest einen Lasersensors (5', 5", 16) zu vorbestimmten Zeiten abzuleiten, wodurch eine räumliche Synchronisation zwischen dem zumindest einen Lasersensor (5', 5", 16) und seiner Position ausgeführt wird.

4. Vorrichtung nach Anspruch 2, mit einem Temperaturkompensationssystem, das derart angepasst ist, die Wirkungen der Temperatur an dem zu vermessenden Gewindeobjekt zu kompensieren.

5. Vorrichtung nach einem der vorhergehenden Ansprüche, wobei das mechanische Bewegungssystem einen Kopf (41) umfasst, an dem der zumindest eine Sensor (5', 5", 16) an zwei Trägern, die sich in radialen Richtungen parallel zur X-Achse und Y-Achse bewegen können, und einem dritten linearen Träger montiert ist, der sich in der axialen Richtung parallel zu der Z-Achse bewegen kann.

6. Vorrichtung nach einem der vorhergehenden Ansprüche, wobei an dem Drehträger (10) des Kopfes (41) ein Sensor (16) fest und zentral montiert ist, der derart angepasst ist, Messungen bezüglich eines Gewindes innerhalb eines Rohres auszuführen.

7. Vorrichtung nach einem der vorhergehenden Ansprüche, wobei zwei Sensoren (5', 5") an einem Element (40) fest an dem Drehträger (10) des Kopfes (41) montiert sind, die derart angepasst sind, eine Messung an dem Gewinde außerhalb des Gewindeobjekts auszuführen.

## Revendications

1. Dispositif de mesure pour mesurer des paramètres de filet d'un objet fileté et ledit dispositif de mesure définissant un premier système de référence spatiale comprenant des premiers axes de coordonnées (X, Y, Z), l'objet fileté définissant un second système de référence spatiale comprenant des seconds axes de coordonnées (X', Y', Z'), comprenant :

   • au moins un capteur laser commandé par ordinateur (5', 5", 16),
   • un système à mouvement mécanique commandé par ordinateur, sur lequel ledit au moins un capteur (5', 5", 16) est monté, capable de guider l'au moins un capteur (5', 5", 16) pendant des opérations de balayage selon des motifs, ou des trajectoires, de balayage prédéfinis, le long desquelles des points de mesure sont choisis de sorte qu'une matrice qui décrit la forme quadratique présente un rang maximal, lorsque les valeurs correspondent à ces points de mesure sont insérées dans la matrice,
   • un moyen pour synchroniser les signaux de sortie de l'au moins un capteur (5', 5", 16) avec des positions spatiales du système mécanique, et un moyen informatique pour calculer ladite matrice qui décrit la forme quadratique représentant ainsi l'objet fileté dans le premier système de référence spatiale, fournissant ainsi une relation entre le premier système de référence spatiale et le second système de référence spatiale, et pour commander l'au moins un capteur (5', 5", 16) dans les opérations de balayage, pour produire des images informatiques de la forme de filet de l'objet scanné, pour stocker les images et analyser les images informatiques pour obtenir des informations quantitatives concernant les caractéristiques de filet, en particulier le cône, le diamètre de joint et l'ovalisation, l'entrée, la sortie, le diamètre de filet, le pas le long de multiples génératrices du tube, et la hauteur de marche,
   • un circuit électronique connectant l'ordinateur (30) au système à mouvement mécanique et à l'au moins un capteur laser (5', 5", 16).

2. Dispositif selon la revendication 1, comprenant un encodeur/motocontrôleur (32) et une carte d'acquisition (31) connectés à l'ordinateur (30) au moyen d'une connexion numérique et dans lequel l'encodeur/le motocontrôleur (32) et la carte d'acquisition (31) sont connectés l'un à l'autre, moyennant quoi la carte d'acquisition (31) acquiert également des signaux provenant de l'encodeur/du motocontrôleur (32).

3. Dispositif selon la revendication 2, dans lequel l'encodeur/le motocontrôleur (32) est adapté pour détecter la position angulaire de l'au moins un capteur laser (5', 5", 16), et à travers cette position spatiale, déduit la position spatiale exacte de l'au moins un capteur laser (5', 5", 16) à des temps prédéterminés, moyennant quoi une synchronisation spatiale entre l'au moins un capteur laser (5', 5", 16) et sa position est réalisée.

4. Dispositif selon la revendication 2, comprenant un système de compensation de température, adapté pour compenser les effets de la température sur l'objet fileté à mesurer.

**5.** Dispositif selon l'une quelconque des revendications précédentes, dans lequel le système à mouvement mécanique comprend une tête (41) sur laquelle ledit au moins un capteur (5', 5", 16) est monté sur deux étages qui peuvent bouger dans des directions radiales, parallèles à l'axe X et à l'axe Y et sur un troisième étage linéaire, qui peut bouger dans une direction axiale parallèle à l'axe Z.

**6.** Dispositif selon l'une quelconque des revendications précédentes, dans lequel sur l'étage pivotant (10) de la tête (41) est monté de façon solidaire et centrale un capteur (16), adapté pour réaliser une mesure sur un filetage interne d'un tuyau.

**7.** Dispositif selon l'une quelconque des revendications précédentes, dans lequel deux capteurs (5', 5") sont montés sur un élément (40) solidaire de l'étage pivotant (10) de la tête (41), adapté pour réaliser une mesure sur un filetage externe d'un objet fileté.

Fig. 1

Fig. 1a

Fig. 2

20

**Fig. 3**

**Fig. 3a**

Fig. 4

Fig. 5

Fig. 6

(a)

(b)

(c)

(d)

(e)

(f)

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5521707 A